Europäisches Patentamt

European Patent Office

Office européen des brevets

(11) Publication number: **0 133 208**
A2

(12) # EUROPEAN PATENT APPLICATION

(21) Application number: **84107020.4**

(51) Int. Cl.⁴: **B 01 D 53/14, C 10 K 1/16**

(22) Date of filing: **19.06.84**

(30) Priority: **23.06.83 US 506963**

(71) Applicant: **NORTON COMPANY, 1 New Bond Street, Worcester Massachusetts 01606 (US)**

(43) Date of publication of application: **20.02.85 Bulletin 85/8**

(72) Inventor: **Froehlich, Robert Edward, 24 Brookside Drive, New Providence Unio New Jersey (US)**

(84) Designated Contracting States: **DE FR GB IT NL**

(74) Representative: **Dr. Ing. A. Racheli & C., Viale San Michele del Carso, 4, I-20144 Milano (IT)**

(54) **Removal of acidic gases from gaseous mixtures.**

(57) Disclosed is an improved acid gas physical absorption process of the kind in which a feedstock gas containing the acid components is contacted with a solvent, preferably a polyethylene glycoldimethylether, at relatively low temperature and relatively high pressure to absorb the acid gas components thereof. The solvent, after enriching, is regenerated by stripping the acid gas components therefrom by applying heat energy, preferably steam as a stripping gas at relatively high temperature and relatively low pressure. In the improved process, a bottom stream is withdrawn from the stripping tower (24) and it is flashed at a relatively low pressure, then compressed in compressor (33) and reintroduced into the stripper tower (24) at a lower portion thereof to serve as part of the stripping gas. The improved process thus reduces requirements for utility steam.

0133208

Applicant:

NORTON COMPANY

U.S.A. - Worcester, Massachusetts 01606

"IMPROVEMENTS IN OR RELATING TO THE REMOVAL OF ACIDIC GASES FROM GASEOUS MIXTURES"

The necessity for removing acidic gases, such as carbon dioxide and hydrogen sulfide, from gaseous mixtures of other useful materials is a frequent occurrence. Most natural gases contain both carbon Dioxide and hydrogen sulfide, although the proportion of each vary widely from source to source. The production of fuel gas, or artificial natural gas, from coal are processes that have become of great interest in relatively recent times, and the product gas of most such processes contains both carbon dioxide and hydrogen sulfide.

Carbon dioxide, to the extent that it is objectionable, is so because it constitutes a diluent of the desirable chemical content and BTU content of the gas. Hydrogen sulfide, on the other hand, is considered a true contaminant, since upon combustion it produces sulfur dioxide which is considered at the least an irritant and at the worst, a dangerous atmospheric pollutant. In addition, it should be noted that hydrogen sulfide, if it can be gathered in sufficient quantity and concentration, forms a good starting material for various processes designed to recover elemental sulfur, which is a by-product of natural gas production or coal gasification having economic value.

Among the processes available for removing acidic gas components from otherwise useful gases are a class called "physical absorption" processes. Such processes involve the use of an organic solvent having a high solution power for acidic gas components. The mechanism involved is thought to involve absorption rather than a sort of chemical reaction, and a relative virtue of such processes is that the energy requirements are relatively low. In addition, the equipment needed is relatively simple. In an acid gas physical absorption process, it is typical that a feedstock gas containing the objectionable acid gas components is contacted with the organic solvent at a relatively low temperature and a relatively high pressure. In this contacting operation, the acid gas components are absorbed to produce an "enriched" solvent. The enriched solvent is regenerated by stripping the acid gas components out of it in a separate step or series of steps. In some cases the stripping operation may be done in one or more flash drum operations involving the addition of substantially no heat, but merely the abrupt reduction of pressure on the solvent. Most physical absorption processes involve supplementing flash drum or heatless separation steps with an ultimate heat regeneration step to complete the stripping of the acid gas components out of the organic solvent. The heat stripping step often involves the use of a stripping gas, such as air, purified natural gas, reboiled solvent, or steam. The present invention is involved with improvements in the last mentioned type of processes, that is a process in which steam is a primary, if not sole, stripping gas in the heat regeneration section of the process, although it is also applicable to strippers driven in other ways.

As was mentioned above, there are several physical absorption processes currently in use or under active consideration. The present invention is particularly useful with a family of processes sometimes designated by the trademark "Selexol", of Norton Company, which process employs certain polyethylene glycol-dimethylethers. Nonetheless, certain aspects of the invention may be advantageously applied in connection with other physical absorption processes.

As was pointed out above, the invention involves improvements in acid gas physical absorption processes and is particularly applicable to such processes of the kind in which a feedstock gas containing acid gas components is contacted with a polyethylene glycol-dimethylether at a relatively low temperature and relatively high pressure to absorb the acid gas components thereof. In such process, the ether, after enriching, is regenerated by stripping the acid gas components therefrom with a stripping gas that at least partly is made up of steam. The stripping is conducted at relatively high temperature and relatively low pressure. The improvement of the invention in such a process comprises withdrawing a bottom stream from the stripping step and flashing it at relatively low pressure to produce a steam-rich flash gas. The steam-rich flash gas is compressed mechanically, and the compressed flash gas is introduced into the stripping step of the process as part of the stripping gas, thereby reducing the requirements for utility steam.

The invention is applicable to such acid gas physical absorption processes, whether they utilize steam directly as a stripping gas in the manner outlined above, or indirectly as the heat source in a reboiler which vaporizes a stream drawn from the bottom or lower reaches of the stripping tower.

From the foregoing it can be seen that a primary object of the invention is to provide improvements in an acid gas physical absorption process which increase the energy efficiency of the process by steps which reduce the requirements of the stripping step of the process for utility steam or heat energy supplied in some other form from an external source.

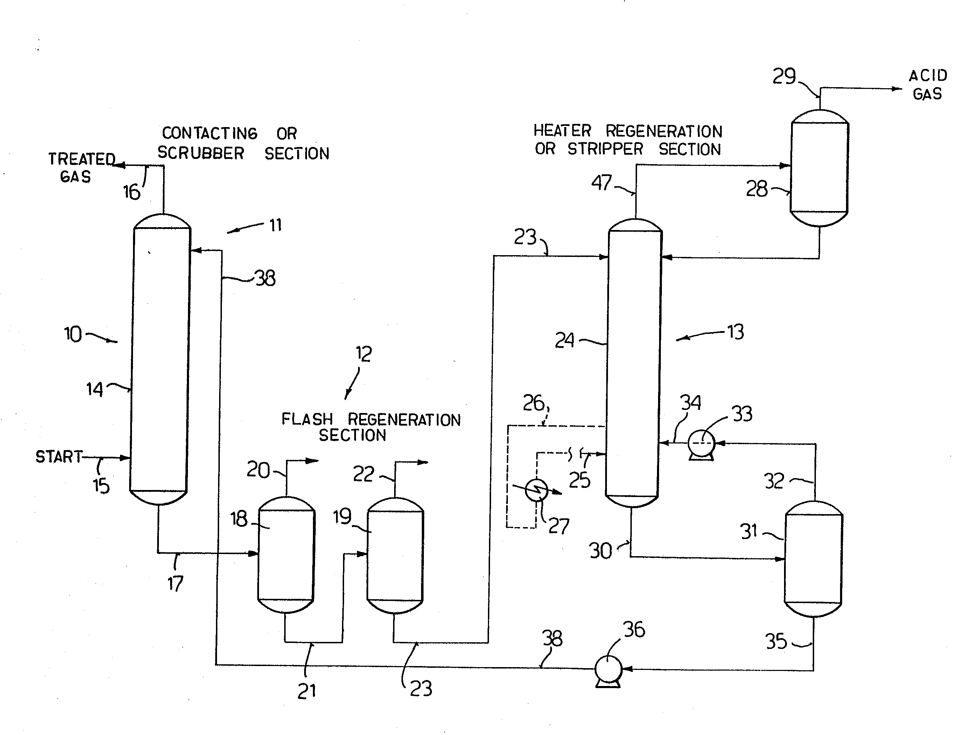

The manner in which the foregoing object, together with other objects and purposes, may be achieved can best be understood by a consideration of the detailed description which follows, together with the accompanying drawing, the single figure of which contains a simplified somewhat diagrammatic flow diagram of an acid gas physical absorption process incorporating the special features and advantages of the present invention.

In the drawing, the diagrammatically shown acid gas physical absorption plant is designated generally as 10, and as there drawn it consists of three main sections, a contacting or scrubber section designated 11, a flash regeneration section designated generally as 12, and a final heater regeneration or stripper section designated generally as 13. It should be noted that the plant illustrated in the drawing is simplified and somewhat idealized or generalized, particularly in those portions thereof which are least intimately connected with the features of the present invention.

The primary piece of equiment in contacting scrubber section 11 is scrubber tower 14 which is a tower having tower internals (not shown) such as packing or trays designed to promote intimate gas-liquid contact to effect maximum absorption between the organic solvent and the gas, particularly the acid gas components thereof. Feedstock gas is fed into tower 14 near the bottom thereof through line 15. It courses upwardly through the tower, giving up its acid components to solution in the organic solvent flowing downwardly through the tower, and ultimately leaves the tower through top line 16 as finished gas freed from acid gas components such as carbon dioxide and hydrogen sulfide.

Organic solvent of the selected type, such as preferably a polyethylene glycol-dimethylether or mixture of such ethers, is introduced into the tower 14 near the top thereof through line 38. The solvent flows downwardly through the tower over the liquid vapor contact tower internals therein, and in the course of doing so absorbs the acid components from the upflowing feedstock gas stream which it contacts, particularly the carbon dioxide and hydrogen sulfide typically found therein. The enriched solvent then leaves the scrubber tower through bottom line 17 which leads to the flash regeneration section 12.

In the flash regeneration section 12, there are shown two flash drums 18 and 19 arranged in a series so that the enriched solvent is flashed to a lower pressure first in drum 18 into which it enters through line 17. In drum 18 the flashing results in an overhead stream which leaves the drum through line 20. The overhead stream consists primarily of acid gas components, and a typical destination for such a stream is a sulfur recovery unit or a waste gas burner. The bottom stream from flash drum 18 leaves it through line 21 and comprises a solvent stream somewhat depleted in acid gas component. The solvent stream is delivered through line 21 into the second flash drum 19. Again, the flashing process produces an overhead stream of acid gas components, which leaves drum 19 through line 22. This stream is sent to a vent, burner, or sulfur recovery unit. The bottom stream out of flash drum 19, which is a solvent stream further depleted in acid gas, is delivered through line 23 to the heat regeneration or stripper section 13 of the plant.

While the flash regeneration section 12 as shown on the drawings and described herein above illustrates two flash drums arranged in series, that is, with the bottoms output of one being the feed for the next, it should be understood that in acid gas physical absorption process plants various other arrangements of flash drums are employed, and the particular arrangement shown and described herein is intended to be by way of non-limiting illustration.

5. The primary piece of equipment in the heater regeneration or stripper section of the plant is stripper tower 24. Tower 24 may be divided into various sections, as is known in the art, and is preferably provided with tower internals (not shown) such as packing or trays designed to bring about efficient gas-liquid contact between the upflowing gas stream within the tower and the downflowing organic solvent stream.

The solvent stream from the flash tank 19 is introduced through the line 23 and the interior of tower 24 is arranged so that the solvent cascades across tower internals configured and arranged to promote good vapor liquid contact for mass and heat transfer. The tower may be filled with packing or with trays or other vapor liquid contact devices. Tower 24 has a stripping gas input line designated 25 near the bottom thereof. Steam or another stripping gas, or a combination of steam and another stripping gas may be introduced through line 25. Typically the source of the steam will be the plant utilities, or steam generated from waste heat in another part of the plant.

An alternate scheme for supplying heat energy to the bottom of the tower other than utility steam is shown in dashed lines in the drawing. It includes draw-off line 26, and heat exchanger 27 connectable to input line 25. Under this alternate heating scheme, highly stripped organic solvent is drawn off at a collecting tray (not shown) near the bottom of the tower, and is heat-exchanged with utility steam or waste heat steam in heat exchanger 27. The heat exchange may be under conditions adequate to vaporize some or all of the lean solvent. The hot solvent is then fed to line 25 and into the stripper tower near its bottom and alone, or in conjunction with other sources of stripper gas, courses upwardly through the tower in counter-current heat and mass exchange with the down-coming organic solvent introduced through line 23.

In tower 24, mass and energy exchange occurs which results in the gas leaving the tower through top-line 47 consisting heavily of acid gas components, together with inerts and some organic solvent. The top gas is fed to a flash drum 28, and the bottom stream out of flash drum 28 is fed through line 37 as a reflux back into the top of tower 24. The top stream out of flash drum 28 is essentially acid gas and inerts and leaves the flash drum 28 through line 29 which typically delivers it to a sulfur recovery plant or waste burner or vent.

The bottom stream leaving stripper tower 24 through line 30 consists primarily of organic solvent and entrained water. The bottom stream is relatively hot and is at a low to moderate pressure. It is delivered through line 30 to flash drum 31 where its pressure is lowered and it divides into two streams. The bottom stream leaving flash drum 31 through line 35 is essentially lean organic solvent, and it is delivered through pump 36 to line 38 which carries it to the top of the scrubber section 14 where it is introduced into the scrubber. The overhead stream out of flash drum 31 consists primarily of water vapor at relatively low pressure, but at a temperature above the boiling point of water at that pressure. It leaves the flash drum through line 32 and is mechanically compressed by compressor 33 to form a high pressure steam stream which is fed through line 34 into stripper tower 24 near the bottom thereof.

By utilizing the steam derived from the flash operation in flash drum 31 to serve as a portion of the stripping gas in stripper 24, the requirement for utility steam for that function, or alternately, for the function of driving the reboiler heat exchanger 27, is greatly reduced. A significant percentage of steam saving may be realized, and the sole operational penalty is the cost of driving the mechanical compressor 33. In addition, another advantage is obtained in that the water flashed is no longer a material portion of the stream fed from the bottom of the stripper to the top of the scrubber, thus eliminating an undesirable dilution of the organic solvent in the scrubber, which dilution is accompanied by a parallel reduction in absorption capacity per unit volume of liquid moving downward through the scrubber.

A still further advantage gained in accordance with the present invention is that the operating temperatures in the reboiler exchanger 27, if such is employed, may be reduced somewhat, which slows down the process of degradation of the solvent which is inevitably involved in the reboiling operation. Since the solvent under such milder conditions will last longer, the need for adding makeup solvent is reduced, along with the expense of doing so.

From the foregoing it can be seen that the present invention affords material economic and operational improvements in the operation of a physical absorption acid gas removal process.

A latitude of modification, change and substitution is intended in the foregoing disclosure and in some instances some features of the invention will be employed without a corresponding use of other features. Accordingly, it is appropriate that the appended claims be construed broadly and in a manner consistent with the spirit and scope of the invention therein.

NORTON COMPANY

U.S.A. — Worcester, Massachusetts 01606

C L A I M S

1.          In an acid gas physical absorption process of the kind in which a feedstock gas containing acid gas components is contacted with a solvent at relatively low temperature and relatively high pressure to absorb the acid gas components thereof and in which said solvent, after enriching, is regenerated by stripping the acid gas components therefrom by applying heat energy thereto at relatively high temperature and relatively low pressure, characterized by:

flashing a bottom stream from said stripping step at relatively low pressure to produce a steam-rich flash gas;

compressing said steam-rich flash gas; and

introducing said compressed flash gas to said stripping step, thereby reducing the requirements for utility steam for such purpose.

2.          A process as in claim 1, characterized in that the solvent is an organic solvent, while the heat energy applied is steam.

3.          A process in accordance with claim 2 in which said stripping step includes applying utility steam to said solvent as a stripping gas.

4.        A process in accordance with claim 2 in which said stripping step includes withdrawing solvent and heat exchanging it against utility steam to produce a stripping gas.

5.        A process in accordance with claim 1 in which said solvent is a polyethylene dimethyl ether or a mixture thereof.

6.        A plant for removing acidic gas such as carbon dioxide and hydrogen sulfide, from gaseous mixtures comprising a scrubber section (10) and a regeneration section (12, 13), characterized in that the bottom of the final regeneration tower (24) is connected through line (30) to the inlet of a compressor (33) through flash drum (31) while the outlet of the compressor (33), is connected through line (34) to the final regeneration tower (24).

7.        Plant as in claim 6, characterized in that the flow at the bottom of flash drum (31) is sent through line (35) to the scrubber section (14) as solvent.